# FASCICULE DE BREVET EUROPEEN

(11) **EP 0 562 939 B1**
(45) Date de publication et mention de la délivrance du brevet: **10.07.1996**
(21) Numéro de dépôt: 93400731.1
(22) Date de dépôt: 22.03.1993
(51) Int. Cl.: G01V 1/22

(54) **Dispositif et méthode d'exploration sismique**
Vorrichtung und Verfahren zur seismischen Untersuchung
Apparatus and method for seismic exploration

(30) Priorité: 23.03.1992 FR 9203576
(43) Date de publication de la demande: 29.09.1993
(73) Titulaire: INSTITUT FRANCAIS DU PETROLE, F-92502 Rueil-Malmaison (FR)
(72) Inventeur: Staron, Philippe, F-91540 Mennecy (FR)

(56) Documents cités:
- EP-A- 0 182 452
- EP-A- 0 226 366
- US-A- 3 863 200

## Description

La présente invention concerne un dispositif d'exploration sismique dont la configuration et/ou les caractéristiques peuvent être adaptées ou modelées en fonction de conditions particulières, et une méthode pour sa mise en oeuvre.

Les dispositifs d'exploration sismique utilisés pour des campagnes de prospection sismique comportent généralement un dispositif de réception constitué d'un nombre très grand de récepteurs sismiques qui sont disposés en un ensemble d'emplacements de la zone explorée pour recevoir les ondes sismiques réfléchies ou réfractées par les discontinuités du sous-sol, en réponse à des ébranlements transmis dans le sol par une source sismique. Les récepteurs sont en général constitués chacun par une combinaison de plusieurs capteurs élémentaires (géophones, hydrophones) interconnectés électriquement et disposés dans la zone explorée de façon par exemple à filtrer des bruits de surface organisés dans le cadre de prospection sismique par réflexion. Chacun de ces récepteurs fournit une "trace" sismique qui est une moyenne électrique des signaux produits par tous les capteurs élémentaires. Les récepteurs peuvent être répartis sur le terrain ou le long d'un puits ou encore disposés le long d'une flûte sismique remorquée en immersion par un navire. Dans les dispositifs de réception modernes, les groupes de capteurs sont associés à des boîtiers d'acquisition de signaux. Chacun d'eux est adapté à collecter les signaux délivrés par un ou plusieurs groupes de capteurs, à les numériser, à les mémoriser et éventuellement à effectuer des sommations de plusieurs traces successivement enregistrées. Certains de leurs paramètres de fonctionnement peuvent être modifiés par télécommande. Sur commande d'une station centrale de commande et d'enregistrement, chaque boîtier d'acquisition transmet séquentiellement les traces mémorisées à un dispositif d'enregistrement par une plusieurs voies de communications communes (câbles ou canaux hertziens). De tels dispositifs sont décrits par exemple dans les demandes de brevet EP-A-0 226 366 et EP-A-0 182 452. L'agencement des différents capteurs d'une même "trace sismique" a une grande incidence pour obtenir une bonne rejection des bruits de surface. Ils peuvent être disposés à intervalles réguliers les uns des autres ou bien encore à intervalles inégaux dans certains cas pour mieux filtrer les bruits de surface sans dégrader les signaux utiles. En prospection sismique terrestre, il est connu d'effectuer des "tirs de bruit" dont l'analyse permet de définir la meilleure disposition relative des capteurs d'une même trace.

Ces capteurs peuvent encore être associés avec des moyens pour modifier les caractéristiques des signaux qu'ils produisent, réseaux passifs ou modules d'amplification locaux pour pondérer leurs sensibilités ou leurs gains respectifs, filtres actifs passe-bas pour atténuer des bandes de fréquence indésirables etc. Différents procédés de pondération active ou passive sont décrits par exemple dans les brevets US No. 2 698 927, 2 747 172, 3 400 783, 3 863 200, 3 863 201 etc.

Les moyens de traitement analogique pour modeler le gain ou le spectre de fréquence des différents capteurs, permettent un affaiblissement considérable du niveau des bruits avant la numérisation des signaux utiles dans les boîtiers d'acquisition ou bien au laboratoire central d'enregistrement et donc de réserver toute la dynamique des moyens de numérisation pour ces signaux.

Le principal inconvénient de tous les appareillages de prétraitement analogique tient essentiellement à leur structure figée. Les paramètres de filtrage doivent être connus à l'avance et en admettant que le dispositif de réception effectivement mis en place sur le terrain permette une modification de ces paramètres, il faut encore procéder aux adaptations nécessaires sur les lieux mêmes d'implantation de ces moyens de traitement locaux, ce qui retardent les opérations d'enregistrement. En outre, les corrections éventuelles apportées avant un "tir" ne peuvent être modifiées pendant les enregistrements.

Or, il existe de nombreux cas, comme on le verra dans la suite de la description, où des ajustements et réarrangements de traces seraient très utiles pour mieux s'adapter à la configuration du sous-sol exploré et obtenir des coupes sismiques plus lisibles. On pourrait, par une extension des possibilités des laboratoires d'enregistrement existants, envisager une solution pour rendre plus facilement modelable un dispositif de réception sismique. Si l'on disposait par exemple d'un laboratoire avec une dynamique de 20 à 24 bits, capable d'acquérir entre 500 et 4000 voies différentes (au lieu des 12 à 15 bits obtenus actuellement pour l'acquisition de 50 à 400 traces), on pourrait se passer des moyens de filtrage analogiques indiqués car on serait en mesure d'acquérir les signaux de chacun des capteurs élémentaires répartis sur le terrain avec une dynamique suffisante. Le filtrage optimal des bruits serait obtenu dans ce cas a posteriori à partir des signaux élémentaires enregistrés. Cependant, le coût d'un tel laboratoire à grande dynamique et grand nombre de traces, joint au coût du traitement du grand volume de données obtenu, serait prohibitif.

La méthode d'exploration sismique selon l'invention comporte l'installation dans une zone à explorer d'un dispositif d'émission-réception constitué d'un ensemble de récepteurs produisant un ensemble de traces sismiques, d'une source d'ébranlements sismiques et d'au moins une station de commande et d'enregistrement. Elle est caractérisée en ce que chaque trace d'une partie au moins de l'ensemble des traces sismiques est obtenue par la combinaison d'un certain nombre de signaux sismiques issus de plusieurs capteurs élémentaires (Ci) associés à des éléments de contrôle, cette combinaison pouvant être modifiée à tout moment par télécommande depuis la station de commande et d'enregistrement en changeant les signaux élémentaires combinés et/ou en modifiant la configuration des capteurs élémentaires entrant dans la combinaison.

La méthode peut comporter l'application de télécommandes permettant par exemple
- le réglage différencié de l'amplitude des différents signaux constituant au moins une desdites traces, ou bien
- l'application de déphasages sélectifs aux signaux reçus par les capteurs constituant au moins une desdites traces, ou bien encore
- la sélection du nombre de signaux captés constituant au moins une desdites traces, ou bien encore
- d'obtenir une combinaison choisie de signaux reçus par les capteurs d'au moins une desdites traces, telle que des filtrages convolutionnels ou récursifs par exemple; ou encore
- d'obtenir l'inclusion de capteurs particuliers dans plusieurs traces sismiques adjacentes.

Les réglages précédents peuvent être éventuellement combinés et aussi éventuellement être modifiés au cours du temps pendant l'enregistrement d'un tir par exemple.

La mise en oeuvre de la méthode selon l'invention rend à tout instant le dispositif de réception modelable avant chaque déclenchement de la source sismique ou même éventuellement durant la phase de réception des signaux sismiques consécutifs au déclenchement de la source. On évite ou on écourte donc les phases préalables de changements de configuration, habituelles avec les systèmes de réception à structure figée. De surcroît, on rend possible sans avoir à recourir à un laboratoire à capacités très élargies, l'application en temps réel aux traces de modifications ou traitements divers durant le cours de séances d'enregistrement sur le terrain.

Le dispositif d'exploration sismique selon l'invention comporte un ensemble de récepteurs sismiques produisant un ensemble de traces sismiques, une source d'ébranlements sismiques, et au moins une station de commande et d'enregistrement pour collecter les traces sismiques provenant des différents récepteurs. Il est caractérisé en ce que chaque récepteur d'un groupe au moins de l'ensemble des récepteurs comporte une pluralité de capteurs sismiques élémentaires associés à des éléments de contrôle télécommandables, et des moyens de combinaison des signaux sismiques issus des éléments de contrôle, le dispositif comportant des moyens de télécommande pour agir à distance sur les différents éléments de contrôle de façon à modifier à volonté et à tout instant choisi, la configuration de capteurs élémentaires constituant chacun des récepteurs et/ou pour modifier au moins une partie des signaux élémentaires combinés pour produire chaque trace sismique issu dudit groupe.

Le dispositif peut comporter un ensemble d'appareils d'acquisition répartis dans la zone à explorer pour collecter chacun les signaux d'au moins un récepteur sismique, avec au moins une voie de communication entre les appareils d'acquisition et la station de commande et d'enregistrement pour la transmission de données et de signaux de commande, les moyens de télécommande étant reliés alors aux éléments de contrôle par l'intermédiaire de cette voie de communication et de moyens conducteurs disposés entre eux et les appareils d'acquisition.

Les éléments de contrôle peuvent comporter par exemple des éléments opto-électroniques.

Les moyens conducteurs arrivent par exemple aux éléments de contrôle associés à des ensembles de capteurs, les moyens de télécommande comportent des moyens de codage pour associer des mots d'adresse aux signaux de commande et les éléments de contrôle peuvent comporter aussi des décodeurs d'adresse. Les moyens conducteurs comportent par exemple des moyens de réglage.

On peut encore dédoubler les connexions partant de plusieurs capteurs de façon à associer chacun d'eux à plusieurs traces adjacentes.

D'autres caractéristiques et avantages de la méthode et du dispositif selon l'invention apparaîtront mieux à la lecture de la description ci-après de modes de réalisation décrits à titre d'exemples non limitatifs, en se référant aux dessins annexés où :
- la Fig.1 montre un dispositif d'exploration sismique disposé dans une zone à explorer;
- la Fig.2 montre schématiquement un premier mode de réalisation de l'invention avec une liaison individuelle entre chaque moyen de réglage et l'appareil d'acquisition associé;
- la Fig.3 montre schématiquement un deuxième mode de réalisation de l'invention avec une liaison adressable entre les moyens de réglage et l'appareil d'acquisition associé;
- la Fig.4 montre schématiquement un premier mode de réalisation d'un élément de réglage de type opto-électronique associé à un capteur sismique;
- la Fig.5 montre une variante du mode de réalisation précédent avec des éléments de réglage adressables;

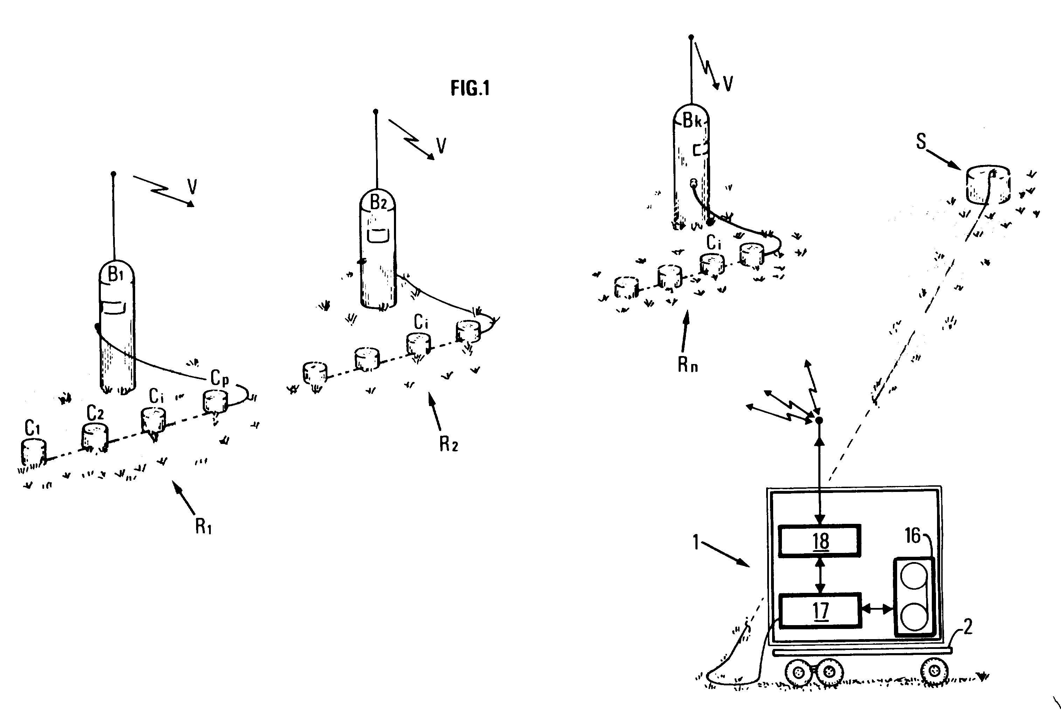

Un système d'exploration sismique terrestre comporte généralement (Fig.1) une source d'ondes acoustiques S et un dispositif de réception et d'acquisition sismique comprenant un grand nombre de récepteurs sismiques R1, R2, ... , Rn qui sont répartis sur le terrain et un poste central de commande et d'enregistrement 1 installé sur un véhicule 2 pour commander le déclenchement de la source S et centraliser les données sismiques captées par les différents récepteurs R1 à Rn. Chaque récepteur sismique Ri est connecté individuellement au poste central 1 ou de préférence à un boîtier B1, B2,..., Bn contenant un appareil d'acquisition de données adapté à collecter les signaux produits par un ou plusieurs des récepteurs et, sur commande de la station centrale 1, à les transmettre à celle-ci par une voie de communication V telle qu'un câble de liaison ou une liaison hertzienne. Différents dispositifs d'exploration utilisant des appareils d'acquisition communiquant avec une station centrale par radio et/ou par câble, sont décrits dans les brevets du demandeur FR 2.511.772, 2.599.533 et 2.627.652.

Dans les dispositifs de réception sismique antérieurs, chaque récepteur sismique comporte généralement plusieurs capteurs élémentaires C1, C2, ... Cp, interconnectés électriquement de sorte que le signal résultant ou trace sismique est la moyenne de plusieurs signaux élémentaires ayant éventuellement des pondérations fixées à l'avance et difficilement modifiables.

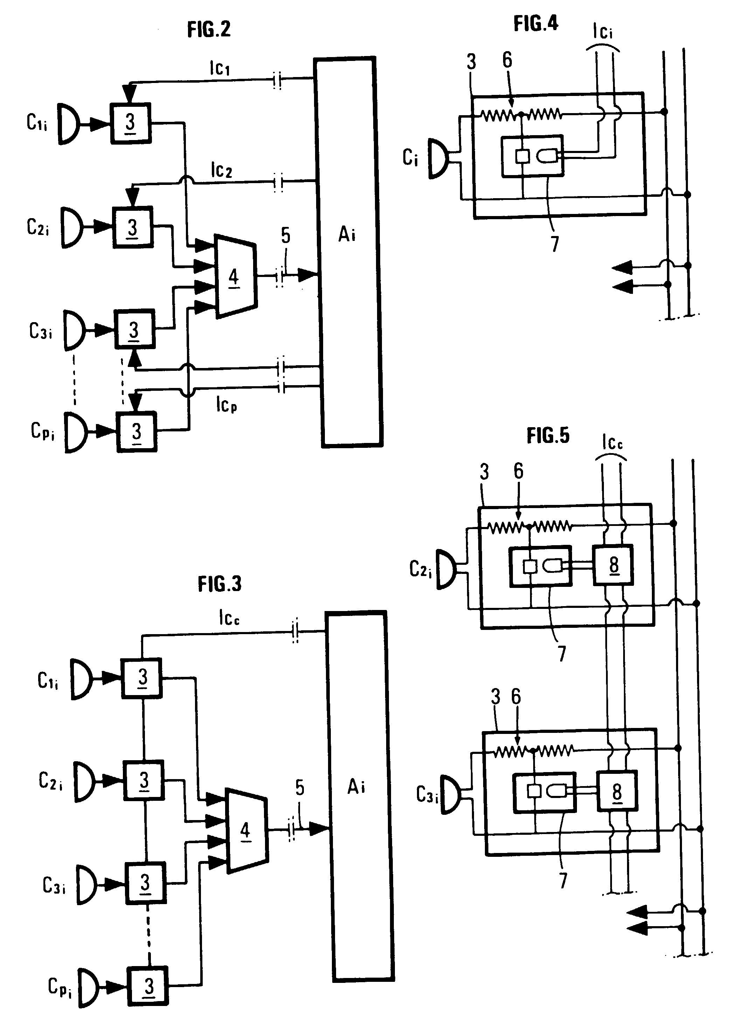

Suivant les modes de réalisation des Fig. 2 à 5, le dispositif selon l'invention comporte des traces sismiques configurables à volonté, depuis la station centrale par exemple.

A cet effet, les capteurs élémentaires Cl à Cp d'un même récepteur sismique Rl ... Rn sont associés (Fig.2, 3) à des moyens locaux de réglage agencés pour produire des combinaisons définies des signaux produits par plusieurs capteurs élémentaires, dont on trouvera par la suite plusieurs exemples. Plusieurs agencements sont possibles. Chaque capteur élémentaire C1i, C2i, C3i...Cpi est associé à un élément de réglage 3 adapté à traiter les signaux captés. Les sorties des différents éléments de réglage sont reliées à des entrées d'un élément de combinaison 4, tel qu'un sommateur par exemple. La sortie de l'élément de combinaison 4 est reliée à une entrée d'un appareil d'acquisition Ai dans un boîtier local B1, B2 etc par une ligne commune 5. Suivant le mode de la Fig.2, chaque élément de réglage est commandé individuellement par une ligne lc1, lc2 ... lcp qui le relie à l'appareil d'acquisition Ai associé. Suivant la variante de la Fig.3, les entrées de commande des différents éléments de réglage 3 sont toutes connectées sur une ligne commune reliée à l'appareil d'acquisition Ai. Dans ce cas, les éléments de réglage sont tous adressables. Les commandes visant un des éléments interconnectées sont émises sur la ligne commune lcc associés à une adresse de destination, et chacun d'eux est pourvu d'un décodeur d'adresses (non représenté).

Chaque élément de réglage 3 peut comporter par exemple (Fig.4, 5) un pont résistif 6 dont une des branches comprend une résistance variable 7 constituée d'une photo-résistance associé à un photo-émetteur relié par des conducteurs particuliers lci avec l'appareil d'acquisition local. L'application sur les conducteurs lci d'un courant électrique plus ou moins intense permet de faire varier la tension électrique délivrée par le capteur Ci et éventuellement de l'annuler pour certaines applications. Le photoémetteur de chaque élément de réglage peut être commandé aussi (Fig.5) par l'intermédiaire d'un décodeur d'adresses 8 Tous les décodeurs 8 associés aux capteurs Cli-Cpi d'un même récepteur Ri sont interconnectés sur une ligne de commande lcc reliée à l'appareil local d'acquisition. L'application d'une commande particulière destinée à l'un des éléments de réglage 3, est transmise en lui associant l'adresse du décodeur 8 visé.

Dans les modes de réalisations décrits, la commande des éléments de réglage est effectué depuis le poste central 1 par exemple. Pour agir sur n'importe quel élément de réglage, on associe à la commande des mots d'adresses désignant spécifiquement le boîtier d'acquistion local et l'élément de réglage 3 concerné. Le message est transmis via la voie de transmission V utilisée (câble ou canal hertzien) à l'appareil d'acquisition. De là, il est aiguillé sur les conducteurs de commande lci particuliers de l'élément de réglage concerné (Fig. 4) ou bien sur la ligne commune lcc de commande (Fig. 5) où il est intercepté par le décodeur local 8 à l'adresse stipulée.

La station centrale de commande et d'enregistrement 1 comporte essentiellement un enregistreur 16, un ensemble de commande 17 programmé pour gérer les cycles d'enregistrement sismique et pour élaborer les commandes des différents éléments de réglage 3 associés aux différents récepteurs Ri sur le terrain, et un ensemble de communication 18 adapté à la voie de communication reliant le poste central 1 aux différents boîtiers d'acquisition.

De nombreux exemples d'utilisation du dispositif selon l'invention vont être donnés ci-après pour montrer la grande variété des traitements de données sismiques qui sont réalisables depuis la station centrale par des opérateurs.

Avec le dispositif tel qu'il a été décrit, on peut réaliser de très nombreuses opérations plus ou moins complexes bien connues des géophysiciens.

Dans le cadre d'un filtrage multicanal, on peut par exemple :
- sélectionner par tout ou rien les capteurs dont les signaux élémentaires sont combinés pour former les différente traces;
- choisir à volonté les coefficients d'atténuation particuliers à donner aux signaux de chaque capteur;
- appliquer des retards choisis aux différents signaux avant leur combinaison;
- singulariser à volonté chaque trace par des valeurs de gain et de retards particulières;
- faire varier les valeurs des gains ou atténuations ainsi que les retards appliqués durant chaque durée d'enregistrement;
- soustraire un modèle de bruit, etc.

Dans le cadre d'un filtrage mono-canal, on peut aussi faire du filtrage en fréquence dit convolutionnel ou d'autres filtrages plus complexes tels que du filtrage récursif.

De cette façon, le filtrage dit à la trace, peut être optimisé et appliqué de façon particulière en tout point de l'espace de coordonnées (x, t), afin de mieux sauvegarder les caractéristiques des signaux.

Par l'emploi de la méthode selon l'invention, on peut simplifier beaucoup les procédures d'exploitation. En prospection sismique de surface, on peut effectuer une pluralité de "tirs" de bruit en sélectionnant à chaque fois un seul capteur par trace, de manière à déterminer à l'aide d'un calculateur de laboratoire sismique, les paramètres de filtrage à la trace puis, avec les valeurs trouvées pour ces paramètres de filtrage, réaliser un tir d'exploitation. Les tirs dits de bruit et les tirs d'exploitation peuvent être faits avec les mêmes capteurs. Ce n'est pas le cas d'habitude où les capteurs pour la mesure du bruit et ceux utilisés pour l'exploitation ne sont généralement pas les mêmes. Il faut donc procéder à leur remplacement en essayant de conserver l'implantation précédente du capteur de bruit remplacé. Ce changement de capteurs est, on le sait, cause d'erreurs sur les paramètres de bruit.

La simplification procurée par les moyens de réglage télécommandables des pondérations, rend néanmoins possible d'effectuer un filtrage du bruit sans tirs de bruit préalables. Dans le cas où l'on dispose de capteurs vectoriels à plusieurs axes de réception, permettant de déterminer la polarisation des signaux reçus, on peut rendre plus efficace aussi le filtrage à la trace en utilisant les données de polarisation pour mieux caractériser les signaux utiles et les bruits à éliminer.

La faculté donnée aux opérateurs de terrain de modeler les récepteurs est très utile aussi dans le domaine de la prospection sismique de puits où l'on doit minimiser les ondes de tube ou ondes de Stoneley dont l'amplitude est très supérieure à celle des signaux utiles. Ayant mesuré les caractéristiques des bruits à éliminer, on peut, par action sur les moyens de réglage, obtenir un filtrage très efficace avant enregistrement et donc conserver toute la dynamique de numérisation pour les signaux utiles. Quand on réalise des opérations de prospection sismique 3D avec des capteurs répartis régulièrement sur toute une surface et une source que l'on déplace successivement en de nombreux points de cette surface, on sait que les directions de propagation du bruit varie avec le déplacement de la source. Avec les moyens de réglage télécommandables employés, on peut encore ajuster facilement pour chaque trace, la direction de filtrage optimal pour tenir compte des changements dans la propagation du bruit. Pour certaines applications, on est conduit à étaler les traces en augmentant la distance entre les capteurs si bien que des traces adjacentes peuvent se recouvrir partiellement. Dans ce cas, on est amené à implanter des capteurs sensiblement au même endroit sur le sol, chacun d'eux étant relié à une trace différente. Avec les moyens décrits de modelage des signaux, on peut combiner les signaux d'un même capteur à ceux de deux traces différentes, à condition de prévoir des connexions permettant le transfert de ces signaux de l'une à l'autre. On peut donc dans ce cas, diminuer le nombre total de capteurs nécessaires sans perte d'efficacité dans le filtrage.

Les exemples donnés ci-dessus ne sont bien sûr pas limitatifs.

On ne sortirait pas du cadre de l'invention en utilisant des éléments de réglage télécommandables depuis la station centrale combinés avec un dispositif de réception classique où les récepteurs sont tous connectés directement à la station de commande et d'enregistrement et non par l'intermédiaire d'appareils d'acquisition locaux.

## Revendications

1. Méthode d'exploration sismique comportant l'installation dans une zone à explorer d'un dispositif d'émission-réception constitué d'un ensemble de récepteurs produisant un ensemble de traces sismiques, d'une source d'ébranlements sismiques (S) et d'au moins une station de commande et d'enregistrement (1), caractérisée en ce que chaque trace d'une partie au moins de l'ensemble des traces sismiques est obtenue par la combinaison d'un certain nombre de signaux sismiques issus de plusieurs capteurs élémentaires (Ci) associés à des éléments de contrôle (3, 4, 11, 12), ladite combinaison pouvant être modifiée à tout moment par télécommande depuis la station de commande et d'enregistrement en changeant les signaux élémentaires combinés et/ou en modifiant la configuration des capteurs élémentaires entrant dans la combinaison.

2. Méthode selon la revendication 1, caractérisée en ce qu'elle comporte l'application de télécommandes permettant le réglage différencié de l'amplitude des différents signaux élémentaires constituant au moins une desdites traces.

3. Méthode selon l'une des revendications précédentes, caractérisée en ce qu'elle comporte l'application de télécommandes permettant d'appliquer des déphasages sélectifs aux signaux élémentaires reçus par les capteurs constituant au moins une desdites traces.

4. Méthode selon l'une des revendications précédentes, caractérisée en ce qu'elle comporte l'application de télécommandes permettant d'obtenir une sélection du nombre de signaux élémentaires captés constituant au moins une desdites traces.

5. Méthode selon l'une des revendications précédentes, caractérisée en ce qu'elle comporte l'application de télécommandes permettant d'obtenir une combinaison choisie de signaux élémentaires reçus par les capteurs d'au moins une desdites traces.

6. Méthode selon la revendication précédente, caractérisée en ce qu'elle comporte l'application de télécommandes permettant d'obtenir un filtrage convolutionnel.

7. Méthode selon la revendication précédente, caractérisée en ce qu'elle comporte l'application de télécommandes permettant d'obtenir un filtrage récursif.

8. Méthode selon la revendication précédente, caractérisée en ce qu'elle comporte l'établissement de connexions multiples partant de plusieurs capteurs et l'application de télécommandes permettant l'inclusion de capteurs dans plusieurs traces différentes.

9. Méthode selon l'une des revendications précédentes, caractérisée en ce qu'elle comporte l'application de télécommandes permettant d'obtenir une variation au cours du temps des réglages appliqués aux signaux reçus par les capteurs d'au moins une desdites traces.

10. Dispositif d'exploration sismique comportant un ensemble de récepteurs sismiques produisant un ensemble de traces sismiques, une source d'ébranlements sismiques (S), et au moins une station de commande et d'enregistrement (1) pour collecter les traces sismiques provenant des différents récepteurs, caractérisé en ce que chaque récepteur d'un groupe au moins de l'ensemble des récepteurs comporte une pluralité de capteurs sismiques élémentaires (Ci) associés à des éléments de contrôle télécommandables, et des moyens de combinaison des signaux sismiques issus des éléments de contrôle, le dispositif comportant des moyens de télécommande (17) pour agir à distance sur les différents éléments de contrôle de façon à modifier à volonté et à tout instant choisi, la configuration de capteurs élémentaires constituant chacun des récepteurs et/ou pour modifier au moins une partie des signaux élémentaires combinés pour produire chaque trace sismique issu dudit groupe.

11. Dispositif d'exploration selon la revendication 10, caractérisé en ce qu'il comporte un ensemble d'appareils d'acquisition (Ai) répartis dans la zone à explorer pour collecter chacun les signaux d'au moins un récepteur sismique, au moins une voie de communication entre les appareils d'acquisition et ladite station de commande et d'enregistrement (1) pour la transmission des données et de signaux de commande, les moyens de télécommande (17) étant reliés auxdits éléments de contrôle par l'intermédiaire de ladite voie de communication (V, 14) et de moyens conducteurs (lci, lcc) disposés entre eux et les appareils d'acquisition.

12. Dispositif de prospection selon la revendication 10 ou 11, caractérisé en ce que les éléments de contrôle (3) comportent des éléments opto-électroniques (7).

13. Dispositif de prospection selon la revendication 11, caractérisé en ce que lesdits moyens conducteurs (lcc) arrivent aux éléments de contrôle associés à des ensembles de capteurs, les moyens de télécommande comportent des moyens de codage pour associer des mots d'adresse aux commandes et les éléments de contrôle comportent des décodeurs d'adresse (8).

14. Dispositif de prospection selon la revendication 10 ou 11, caractérisé en ce que les moyens conducteurs comportent des conducteurs spécifiques (lci) pour chacun des éléments de contrôle.

15. Dispositif de prospection selon l'une des revendications 10 à 16, caractérisé en ce qu'il comporte des conducteurs pour dédoubler les liaisons partant de plusieurs capteurs de manière à associer chacun d'eux à volonté à plusieurs traces sismiques adjacentes.

16. Dispositif de prospection selon la revendication 11, caractérisé en ce qu'il comporte des conducteurs pour établir des liaisons supplémentaires entre des traces adjacentes.

## Patentansprüche

1. Verfahren zur seismischen Exploration, umfassend die Installation einer Vorrichtung zum Sende-Empfang in einer zu untersuchenden Zone, die aus einer Gesamtheit von Empfängern, welche eine Gesamtheit von seismischen Spuren erzeugen, einer Quelle (S) von seismischen Erschütterungen und wenigstens einer Station (1) zur Steuerung und zur Aufzeichnung gebildet ist, dadurch gekennzeichnet, daß jede Spur eines Teiles wenigstens der Gesamtheit von seismischen Spuren durch die Kombination einer bestimmten Anzahl von seismischen Signalen, die von mehreren elementaren Aufnehmern (Ci) kommen, welche mit Elementen (3, 4, 11, 12) zur Steuerung verbunden sind, erhalten wird, wobei die Kombination zu jedem Zeitpunkt durch Fernsteuerung von der Station zur Steuerung und zur Aufzeichnung modifiziert werden kann, indem die kombinierten elementaren Signale geändert werden und/oder indem die Konfiguration der elementaren Aufnehmer, welche sich an der Kombination beteiligen, modifiziert wird.

2. Verfahren nach Anspruch 1, dadurch gekennzeichnet, daß es die Verwendung von Fernsteuerungen umfaßt, welche die differenzierte Regelung der Amplitude von verschiedenen elementaren Signalen, die wenigstens eine der Spuren bilden, gestattet.

3. Verfahren nach einem der vorhergehenden Ansprüche, dadurch gekennzeichnet, daß es die Verwendung von Fernsteuerungen umfaßt, welche gestattet, selektive Phasenverschiebungen auf durch die Aufnehmer erhaltene elementare Signale, die wenigstens eine der Spuren bilden, anzuwenden.

4. Verfahren nach einem der vorhergehenden Ansprüche, dadurch gekennzeichnet, daß es die Verwendung von Fernsteuerungen umfaßt, welche gestattet, eine Selektion der Anzahl von aufgenommenen elementaren Signalen, welche wenigstens eine der Spuren bilden, zu erhalten.

5. Verfahren nach einem der vorhergehenden Ansprüche, dadurch gekennzeichnet, daß es die Verwendung von Fernsteuerungen umfaßt, welche gestattet, eine ausgewählte Kombination von durch die Aufnehmer empfangenen elementaren Signalen, die wenigstens eine der Spuren bilden, zu erhalten.

6. Verfahren nach dem vorhergehenden Anspruch, dadurch gekennzeichnet, daß es die Verwendung von Fernsteuerungen umfaßt, welche gestattet, eine konvolutionelle Filterung zu erhalten.

7. Verfahren nach dem vorhergehenden Anspruch, dadurch gekennzeichnet, daß es die Verwendung von Fernsteuerungen umfaßt, welche gestattet, eine rekursive Filterung zu erhalten.

8. Verfahren nach dem vorhergehenden Anspruch, dadurch gekennzeichnet, daß es die Herstellung von verschiedenen Verbindungen auf Basis von mehreren Aufnehmern und die Verwendung von Fernsteuerungen umfaßt, welche den Einschluß von Aufnehmern in mehreren verschiedenen Spuren gestatten.

9. Verfahren nach einem der vorhergehenden Ansprüche, dadurch gekennzeichnet, daß es die Verwendung von Fernsteuerungen umfaßt, welche gestattet, im Verlaufe der Zeit eine Änderung der Regelungen, die auf durch die Aufnehmer empfangene Signale von wenigstens einer der Spuren angewendet werden, zu erhalten.

10. Vorrichtung zur seismischen Exploration, umfassend eine Gesamtheit von seismischen Empfängern, die eine Gesamtheit von seismischen Spuren erzeugen, eine Quelle (S) von seismischen Erschütterungen und wenigstens eine Station (1) zur Steuerung und zur Aufzeichnung, um die seismischen Spuren, die von den verschiedenen Empfängern kommen, zu sammeln, dadurch gekennzeichnet, daß jeder Empfänger einer Gruppe von wenigstens der Gesamtheit von Empfängern eine Vielzahl von elementaren seismischen Aufnehmern (Ci), die mit fernsteuerbaren Elementen zur Steuerung verbunden sind, und Einrichtungen zur Kombination von seismischen Signalen, die von den Elementen zur Steuerung kommen, umfaßt, wobei die Vorrichtung eine Einrichtung (17) zur Fernsteuerung zum Beeinflussen der verschiedenen Elemente zur Steuerung im Abstand, derart, um die Konfiguration von elementaren Aufnehmern, die jeden der Empfänger bildet, nach Belieben und zu jedem gewählten Zeitpunkt zu modifizieren, und/oder zum Modifizieren wenigstens eines Teiles der kombinierten elementaren Signale, um jede seismische Spur, die von der Gruppe kommt, zu erzeugen, umfaßt.

11. Vorrichtung zur Exploration nach Anspruch 10, dadurch gekennzeichnet, daß sie eine Gesamtheit von in der zu untersuchenden Zone verteilten Einrichtungen (Ai) zur Erfassung, um jedes der Signale von wenigstens einem seismischen Empfänger zu sammeln, wenigstens einen Weg zur Kommunikation zwischen den Einrichtungen zur Erfassung und der Station (1) zur Steuerung und zur Aufzeichnung für die Übertragung von Daten und von Steuerungssignalen umfaßt, wobei die Einrichtungen (17) zur Fernsteuerung mit den Elementen zur Steuerung unter Zwischenschaltung des Weges (V, 14) zur Kommunikation und von stromführenden Einrichtungen (lci, lcc), die zwischen ihnen und den Einrichtungen zur Erfassung angeordnet sind, verbunden sind.

12. Vorrichtung zur Prospektion nach Anspruch 10 oder 11, dadurch gekennzeichnet, daß die Elemente (3) zur Steuerung optoelektronische Elemente (7) umfassen.

13. Vorrichtung zur Prospektion nach Anspruch 11, dadurch gekennzeichnet, daß die stromführenden Einrichtungen (lcc) an den Elementen zur Steuerung, die mit den Gesamtheiten von Aufnehmern verbunden sind, ankommen, wobei die Einrichtungen zur Fernsteuerung Einrichtungen zur Codierung umfassen, um Adressenwörter mit Befehlen zu verbinden, und die Elemente zur Steuerung Adressendecodierer (8) umfassen.

14. Vorrichtung zur Prospektion nach Anspruch 10 oder 11, dadurch gekennzeichnet, daß die stromführenden Einrichtungen spezifische Leiter (lci) für jedes der Elemente zur Steuerung umfassen.

15. Vorrichtung zur Prospektion nach einem der Ansprüche 10 bis 16, dadurch gekennzeichnet, daß sie Leiter zum Entdoppeln der Verbindungen auf Basis von mehreren Aufnehmern umfaßt, derart, um jeden von ihnen nach Belieben mit mehreren benachbarten seismischen Spuren zu verbinden.

16. Vorrichtung zur Prospektion nach Anspruch 11, dadurch gekennzeichnet, daß sie Leiter zum Herstellen von ergänzenden Verbindungen zwischen benachbarten Spuren umfaßt.

## Claims

1. Method of seismic exploration consisting in installing in a zone to be explored an emission-reception device comprising an array of receivers producing a set of seismic traces, a seismic vibration source and at least one control and recording station (1), characterised in that each trace of at least a part of the set of seismic traces is obtained by combining a certain number of seismic signals from several elementary sensors (Ci) linked to control elements (3, 4, 11, 12), the said combination being adjustable at any instant by remote-control from the control and recording station by changing the elementary signals combined and/or by modifying the configuration of elementary sensors included in the combination.

2. Method as claimed in claim 1, characterised in that it consists in applying remote commands allowing differentiated control of the amplitude of the different elementary signals making up at least one of the said traces.

3. Method as claimed in one of the preceding claims, characterised in that it consists in applying remote commands allowing selective phase shifts to be applied to the elementary signals received by the sensors making up at least one of the said traces.

4. Method as claimed in one of the preceding claims, characterised in that it consists in applying remote commands enabling selection of the number of captured elementary signals making up at least one of the said traces.

5. Method as claimed in one of the preceding claims, characterised in that it consists in applying remote commands to obtain a selected combination of elementary signals received by the sensors of at least one of the said traces.

6. Method as claimed in the preceding claim, characterised in that it consists in applying remote commands to allow convolutional filtering.

7. Method as claimed in the preceding claim, characterised in that it consists in applying remote commands to allowing recursive filtering.

8. Method as claimed in the preceding claim, characterised in that it consists in establishing multiple connections from several sensors and applying remote commands enabling sensors to be included in several different traces.

9. Method as claimed in one of the preceding claims, characterised in that it consists in applying remote commands enabling the adjustments applied to the signals received by the sensors of at least one of the said traces to be varied over time.

10. Seismic exploration device consisting of an array of seismic receivers producing a set of seismic traces, a seismic vibration source (S) and at least one control and recording station (1) for collecting the seismic traces from the different receivers, characterised in that each receiver in at least one group of the array of receivers has a plurality of elementary seismic sensors (Ci) linked to remotely operable control elements, and means for combining the seismic signals from the control elements, the device having remote control means (17) to operate from a distance the various control elements in order to modify, as desired and at any chosen instant, the configuration of elementary sensors making up each of the receivers and/or to modify at least a part of the elementary signals combined to produce each seismic trace from the said group.

11. Exploration device as claimed in claim 10, characterised in that it consists of an array of acquisition devices (Ai) distributed throughout the zone under exploration, each of which collects the signals from at least one seismic receiver, at least one communication channel between the acquisition devices and the said control and recording station (1) to transmit the data and the command signals, the remote control means (17) being linked to the said control elements by means of the said communication channel (V, 14) and conductor means (lci, lcc) arranged between them and the acquisition devices.

12. Prospecting device as claimed in claim 10 or 11, characterised in that the control elements (3) have optoelectronic elements (7).

13. Prospecting device as claimed in claim 11, characterised in that the conductor means (lcc) extend to the control elements assigned to the arrays of sensors, the remote control means have encoding means for assigning address words to the commands and the control elements having address decoders (8).

14. Prospecting device as claimed in claim 10 or 11, characterised in that the conductor means have specific conductors (lci) for each of the control elements.

15. Prospecting device as claimed in one of claims 10 to 16, characterised in that it has conductors for splitting the connections from several sensors so as to link each of them to several adjacent traces as required.

16. Prospecting device as claimed in claim 11, characterised in that it has conductors for establishing additional links between adjacent traces.
